# EUROPEAN PATENT APPLICATION

(11) **EP 1 204 048 A1**
(43) Date of publication of application: **08.05.2002**
(21) Application number: 00123924.3
(22) Date of filing: 03.11.2000
(51) Int. Cl.: G06F 17/60

(54) **Method and apparatus for handling scenarios in spreadsheet documents**

(71) Applicant: SUN MICROSYSTEMS, INC., Palo Alto, California 94303 (US)
(72) Inventor: Tesch, Falko, 20253 Hamburg (DE); Breuer, Matthias, 21220 Seevetal (DE)
(74) Representative: Betten & Resch

(57) **Abstract**

A computer-implemented method of processing a spreadesheet document comprises the steps of receiving a data set defining a content of a plurality of said cells, wherein the content of a cell may depend on the content of one or a plurality of other cells, creating an alternative data set (scenario) by receiving a user input defining an alternative content of at least one of the cells of the data set and calculating the content of at least those cells referencing said at least one cell having an alternative content, automatically saving the changed data of the alternative data set, and providing an identifier for each alternative data set (scenario) enabling the user to access the same. The user can then jump between different stored scenarios.

## Description

### FIELD OF THE INVENTION

The present invention relates to the handling of alternative data sets or scenarios in spreadsheet documents comprising cells arranged in rows and columns.

### DESCRIPTION OF THE RELATED ART

Apart from word processing applications spreadsheet software nowadays is one of the most commonly used software tools. A spreadsheet program allows the user to input data into cells which are arranged into columns and rows, and by providing calculation tools it enables the user to easily evaluate data which can be arranged in a table form. Such an evaluation can be done by calculating the values of cells by referring to the content of other cells, or it can be done by graphically displaying the content of the spreadsheet document, or by a combination of both of them.

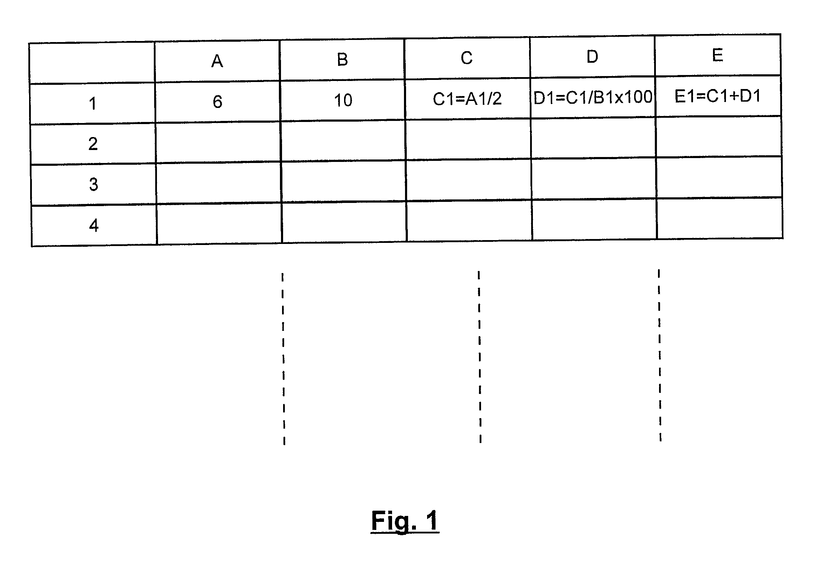

In known spreadsheet programs the user is provided with a graphic display of a table (the spreadsheet) similar to the one schematically illustrated in Fig. 1. The table data is arranged in columns named "A" to "E" and into rows numbered from "1" to "4" in the example of Fig. 1. A user can then enter data into the individual cells, such as for example the number "6" shown in the cell "A1".

Apart from the graphic visualization tools provided by spreadsheet programs the probably most important feature which such spreadsheet programs offer to the user is the possibility to calculate the content of the individual cells by referring to other cells. Known spreadsheet programs such as "StarCalc" produced by Sun Microsystems, and others, provide the possibility to enter for individual cells functions or formulae which define how the content of those cells is to be derived by referring to the content of other cells. For that purpose usually on the graphical user interface there is some location where the user can define the reference and the function or formula for the individual cells. For the sake of simplicity, in Fig. 1 the formulas defining the references are shown directly in the individual cells.

After having input such references, the content of the so defined cells (in case of Fig. 1 cells C1, D1, and E1) is automatically calculated by the program by referring to the content of the referenced cells.

In many cases it is useful to carry out a calculation represented by the spreadsheet based on different alternative starting values or parameters and to compare how the result changes in dependence on the different input parameters. An example may be a proposed loan. The given parameters are the interest rate, capital stock, available funds and the repayment period. For bank and customer it is useful to modify some of these parameters and observe the influence on the other parameters in order to optimally adjust the loan to the customer's needs.

Scenarios can thus be utilized altering values of spreadsheet cells to compute and visualize various results based on different input data. Multiple scenarios within one spreadsheet can only be manipulated one by one. The user is not able to easily alter between different ways of testing. Setting up a new scenario at a given point always forces the user to travel back manually all previous scenarios set up before. This situation worsens with every new generation moving away from the initial data/scenario settings. This is cumbersome and time-consuming in particular if the scenarios relate to more complex spreadsheets.

In the above example the user may fix the amount of money the user wants to loan. The user changes the interest rate, then the repayment period. The user probably wants to change the interest rate again, but with the original value for the repayment period. Using known spreadsheet programs the user has to change all scenarios, the interest rate and the value for the repayment period. In the case of more complex scenarios, the user has to alter numerous scenarios just to go back to the original situation and then again if he wants to follow the same path once more.

It would therefore be desirable to provide a more user friendly handling of scenarios for spreadsheet programs.

### SUMMARY OF THE INVENTION

According to the present invention there is provided a computer implemented method of processing a document comprising cells arranged in rows and columns, said method comprising the steps of: receiving a data set defining a content of a plurality of said cells, wherein the content of a cell may depend on the content of one or a plurality of other cells, creating an alternative data set (scenario) by receiving a user input defining an alternative content of at least one of the cells of the data set and calculating the content of at least those cells referencing said at least one cell having an alternative content, automatically saving the changed data of the alternative data set, and providing an identifier for the alternative data set (scenario) enabling the user to access the same.

The user is thus able to access all previous scenarioes the user has set up. Using the identifier the user can find a specific scenario which the user wants to use as basis for calculating further scenarios.

The data of the spreadsheet may be entered by the user or copied from different computer readable documents. Preferably, the order in which the scenarios are created by the user is recognized and stored, so that the user can follow the way he has made the scenarios. The user may then move forward and backward between different scenarios or even jump between arbitrary ones of the stored scenarios.

According to a preferred embodiment the history of scenarios may be represented by a tree structure which may preferably be displayed on a display medium enabling the user to select previous scenarios using a graphical user interface.

The identifier for identifying a scenario in the history of scenarios may comprise a name. This name may be automatically created by the computer program and/or may be selectable or changeable by the user.

Preferably, a navigation tool is provided for jumping between different scenarios.

A further implementation of the present invention provides a computer system for processing a document comprising cells arranged in rows and columns, the computer system comprising a memory for storing the document data and a processing unit for carrying out the steps of receiving a data set defining a content of a plurality of said cells, wherein the content of a cell may depend on the content of one or a plurality of other cells, creating an alternative data set (scenario) by receiving a user input defining an alternative content of at least one of the cells of the data set and calculating the content of at least those cells referencing said at least one cell having an alternative content, automatically saving the changed data of the alternative data set, and providing an identifier for the alternative data set (scenario) enabling the user to access the same.

A still further implementation of the present invention may be realized by a computer program for processing a computer readable document comprising cells arranged in rows and columns, said computer program comprising program code for executing the following steps receiving a data set defining a content of a plurality of said cells, wherein the content of a cell may depend on the content of one or a plurality of other cells, creating an alternative data set (scenario) by receiving a user input defining an alternative content of at least one of the cells of the data set and calculating the content of at least those cells referencing said at least one cell having an alternative content, automatically saving the changed data of the alternative data set, and providing an identifier for the alternative data set (scenario) enabling the user to access the same.

A program code may be embodied in any form of computer program product. A computer program product comprises a medium which stores or transports computer-readable code, or in which computer-readable code can be embeded. Some examples of computer program products are CD-ROM disks, ROM carts, floppy disks, magnetic tapes, computer hard drives, servers on a network and signals transmitted over the network representing a computer-readable program code.

In accordance with an embodiment of the present invention a user is enabled to follow the history of the scenarios the user has created and to easily navigate through these scenarios which may serve as basis for a new one. The handling of scenarios is therefore greatly facilitated for the user compared with the prior art.

The above-mentioned and other features, utilities and advantages of the present invention will become more readily apparent from the following detailed description of preferred embodiments thereof in connection with the accompanying drawings.

### BRIEF DESCRIPTION OF THE DRAWINGS

Fig. 1 schematically illustrates a spreadsheet.
Fig. 2 schematically illustrates the method steps of a preferred embodiment of the present invention.
Fig.3 schematically illustrates a further preferred embodiment of the present invention.
Fig. 4 schematically illustrates a tree representation of a history of scenarios according to a preferred embodiment of the present invention.
Fig. 5 is a schematic illustration of a computer system to which the present invention may be applied.
Fig. 6 is a schematic illustration of a client-server-configuration to which the present invention may also be applied.

### DETAILED DESCRIPTION OF PREFERRED EMBODIMENTS

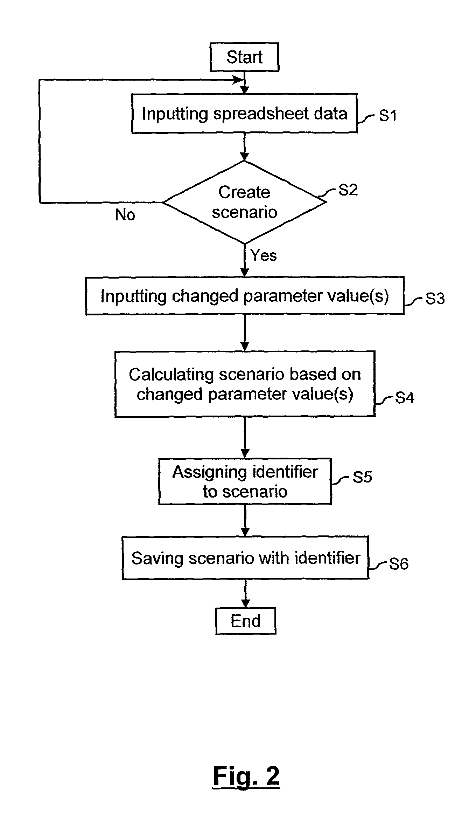

A first embodiment of the present invention is now explained with reference to Fig. 1 and the flowchart of Fig. 2.

Fig. 1 schematically illustrates a spreadsheet document comprising rows 1, 2, 3,... and columns A, B, C etc. In the example shown in Fig. 1 the cells A 1 and B1 comprise the parameter values 6 and 10, respectively. The content of the cells C, D and E are calculated on the basis of the parameter values A 1 and B 1. In the present example C1 has the value 3, D1 30 and E1 33. If the user wishes to know the end result E1 based on a different set of parameters values A, B, the user creates a scenario, for example replacing value A1 = 6 by A1 =7. If the user then wants to see the result for the combination of parameters A = 6 and B =12 the values of both cells A1 and B1 have to be changed. In order to facilitate the navigation between different scenarios of a history of scenarios the present invention automatically assigns an identifier or a name to each scenario created by the user and saves the scenario in storage medium. The user can then retrieve the scenario by reference to the identifier. According to a preferred embodiment it is possible that the user changes this assigned identifier or name to the name the user can more easily recognize.

The method steps of a first embodiment of the present invention are shown in Figure 2. In method step S 1 content is input to the cells of the spreadsheet document. In method step S 2 the system detects whether or not the user intends to create a scenario. If it is detected that the user intends to do so the changed parameter values are received in method step S 3. Then the calculations represented by the spreadsheet are carried out based on the changed parameter values in step S 4. In step S 5 an identifier is assigned to the scenario and the scenario is then stored together with the identifier in method step S 6. The identifier allows a later user access of the scenario. The utility of scenarios is therefore greatly improved.

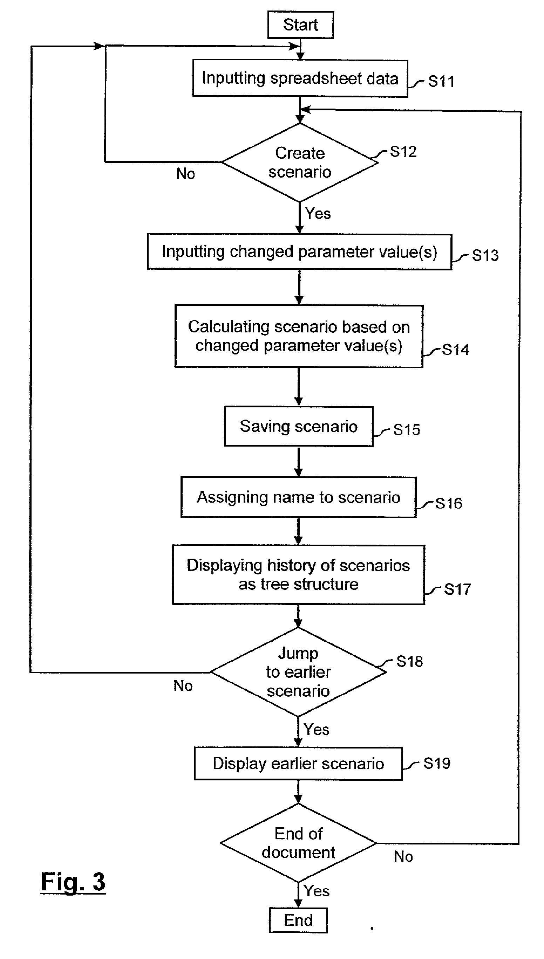

The method steps of a further embodiment of the invention are depicted in Fig. 3. In method step S 11 the cells of the spreadsheet document are filled with content, e.g. by manual input through the user. It is, however, also possible to input the data by copying them from another spreadsheet document or a data base or the like. In method step S 12 the system detects whether or not the user intends to create a scenario. If this is the case the changed parameter value or a number of changed values are inputted by the user in method step S 13. Then, in step S 14, the calculations are carried out based on the changed parameter value(s) and the result is displayed on a display medium. Subsequently the scenario is stored in a storage medium. In order to save storage space it is, of course, possible only to store those values of the data set of the scenario which have been changed with respect to an earlier data set which is already stored in the memory. In the next step S 16 the name or identifier is assigned to the scenario. This name alllows the user to find and retrieve this scenario again later. Preferably, a set name is automatically assigned to the created scenario. This name may then be changed by the user to a more descriptive name. It should be acknowledged here that the order of execution of method steps S 15 and S 16 may be exchanged.

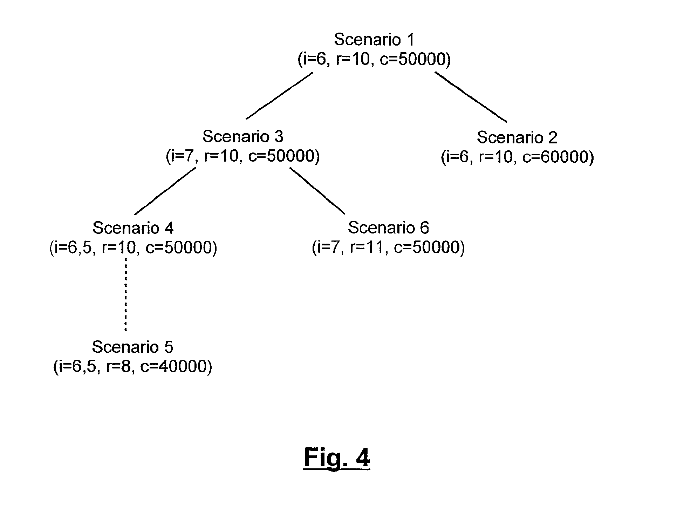

In method step S 17 the history of scenarios created by the user is displayed on a display screen. The scenarios can be displayed as a list or, for example, as a tree structure as is shown in Fig. 4 and will be described in more detail later. Any other suitable type of display is also possible.

In method step S 18 the user can move forward and backward or jump between the earlier scenarios already stored in the memory. Preferably the user is enabled to move along the branches of a tree structure using an input device like a mouse or jumping between the different scenarios with the help of a particular navigation tool. If the user selects one of the earlier scenarios the same is displayed on this display screen in the next method step S 19. Based on this scenario he may change one of the parameters again and create a new scenario (method steps S 12 -S 16). Instead of manually inputting all parameter values again the user can select the closest scenario from the scenario list and take this as the starting point of a new scenario. The use and application of scenarios, in particular to complex calculations, is thus greatly improved.

Fig. 4 shows an example of a tree structure representing a history of scenarios, the names of which are in this example scenario 1, scenario 2... Below the name in brackets the parameter values on which a scenario is based are indicated. In this example i means the interest rate of a loan, r the repayment period and c the capital sum. Two scenarios are connected by straight lines if only one parameter has been changed, i.e. c=60,000 instead of c =50,000 in scenario 2 with respect to scenario 1 or r = 11 compared to r = 10 in scenario 6 with respect to scenario 3. Two scenarios are connected by a broken line if they differ in two parameters, as for example scenario 4 and scenario 5. The tree structure thus allows the user an easy navigation through the scenarios.

If only two parameters are changed in the scenarios a representation as a two dimensional table may be advantageous. Changes of one parameter are represented by a position in the horizontal direction and changes of the other parameter in the vertical direction. In the case of changing three parameters a three dimensional representation would be desirable.

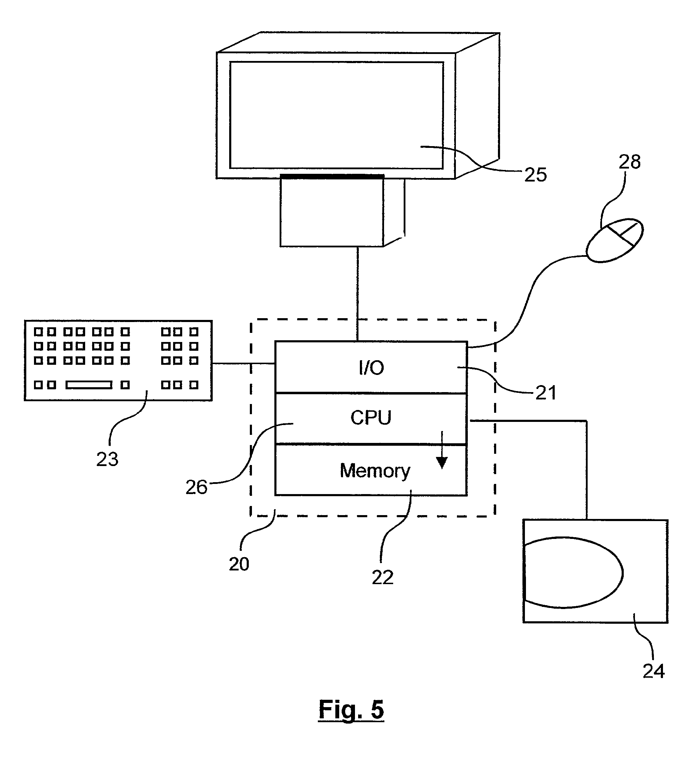

The present invention is applicable to a hardware configuration like a personal computer or a work station as illustrated schematically in Fig. 5. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

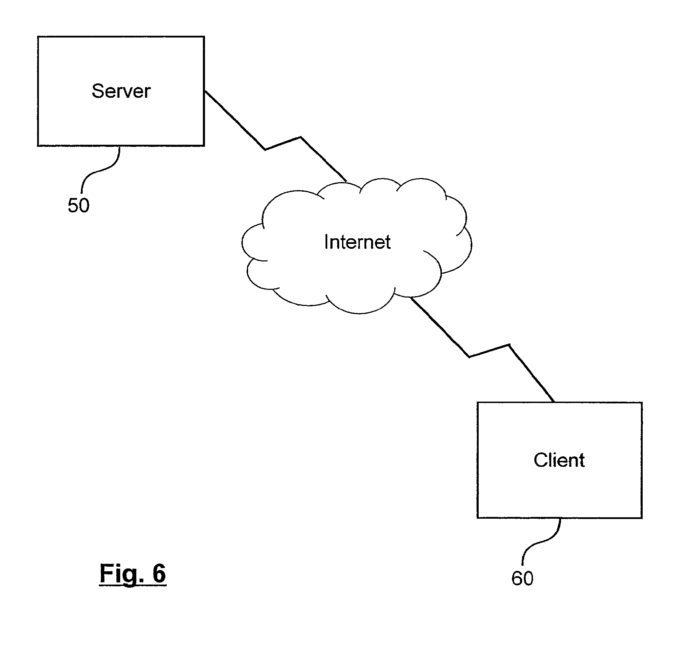

The invention, however, may also be applied to a client-server configuration as illustrated in Fig. 6. The document may be displayed on a display screen of a client device 60 while some or all steps of the method as illustrated before in connection with Figs. 2 and 3 are carried out on a server computer accessible by a client device over a data network as the internet using browser application or the like.

While the invention has been particularly shown with the reference to a preferred embodiment thereof, it will be understood by those skilled in the art that various other changes in the form and details may be made therein without departing from the spirit and scope of the invention.

## Claims

1. A computer implemented method of processing a document comprising cells arranged in rows and columns, said method comprising the steps of:
- receiving a data set defining a content of a plurality of said cells, wherein the content of a cell may depend on the content of one or a plurality of other cells,
- creating an alternative data set (scenario) by receiving a user input defining an alternative content of at least one of the cells of the data set and calculating the content of at least those cells referencing said at least one cell having an alternative content,
- automatically saving the changed data of the alternative data set, and
- providing an identifier for the alternative data set (scenario) enabling the user to access the same.

2. The method of claim 1, wherein said document is a spreadsheet document.

3. The method of claim 1 or 2, wherein the data set is inputted by the user.

4. The method of claim 1 or 2, wherein the data set is transmitted from a computer memory device.

5. The method of one of claims 1 to 4, further comprising the step of recognizing and storing the order of creation of the stored scenario.

6. The method of claim 5, enabling the user to move forward and backward between different stored scenarios.

7. The method of one of claims 1 to 5, enabling the user to jump between arbitrary ones of the stored scenarios.

8. The method of one of claims 5 to 7, comprising the step of arranging the stored scenarios in a tree structure.

9. The method of claim 8, comprising the step of displaying the tree structure on a display medium and enabling the user to select scenarios represented by the tree structure using a graphical user interface.

10. The method of one of claims 1 to 9 wherein the identifier of a scenario comprises a name.

11. The method of claim 10, wherein the name is automatically created when the scenario is stored.

12. The method of claim 10 or 11, wherein a scenario name is selectable by the user.

13. The method of one of claims 7 to 12 comprising providing the user a navigation tool for jumping between different scenarios.

14. A computer system for processing a document comprising cells arranged in rows and columns, the computer system comprising a memory (22) for storing the document data and a processing unit (26) for carrying out the steps of:
- receiving a data set defining a content of a plurality of said cells, wherein the content of a cell may depend on the content of one or a plurality of other cells,
- creating an alternative data set (scenario) by receiving a user input defining an alternative content of at least one of the cells of the data set and calculating the content of at least those cells referencing said at least one cell having an alternative content,
- automatically saving the changed data of the alternative data set, and
- providing an identifier for the alternative data set (scenario) enabling the user to access the same.

15. The computer system of claim 14, wherein said document is a spreadsheet document.

16. The computer system of claim 14 or 15 comprising input means (23, 28) for inputting the data set.

17. The computer system of one of claims 14 to 16 wherein the processing unit (26) is adapted for recognizing and storing the order of creation of the stored scenarios.

18. The computer system of claim 17, enabling the user to move forward and backward between different scenarios.

19. The computer system of one of claims 14 to 17 enabling the user to jump between arbitrary ones of the stored scenarios.

20. The computer system of any one of claims 14 to 19, wherein the processing unit (26) is adapted to arrange the created scenarios in a tree structure.

21. The computer sysem of claim 20, comprising a display medium (25) for displaying the tree structure and a graphical user interface enabling the user to select scenarios represented by the displayed tree structure.

22. The computer system of one of claims 14 to 21, wherein the identifier of a scenario comprises a name.

23. The computer system of one of claims 20 to 22, comprising a navigation tool enabling the user to jump between different scenarios displayed on a display medium (25).

24. A computer program for processing a computer readable document comprising cells arranged in rows and columns, said computer program comprising program code for executing the following steps:
- receiving a data set defining a content of a plurality of said cells, wherein the content of a cell may depend on the content of one or a plurality of other cells,
- creating an alternative data set (scenario) by receiving a user input defining an alternative content of at least one of the cells of the data set and calculating the content of at least those cells referencing said at least one cell having an alternative content,
- automatically saving the changed data of the alternative data set, and
- providing an identifier for the alternative data set (scenario) enabling the user to access the same.

25. A computer program product for processing a computer readable document comprising cells arranged in rows and columns, said computer program comprising program code for carrying out the method of any one of claims 1 to 13.
